# EUROPÄISCHE PATENTSCHRIFT

(11) **EP 1 916 435 B1**
(45) Veröffentlichungstag und Bekanntmachung des Hinweises auf die Patenterteilung: **17.12.2008**
(21) Anmeldenummer: 07012238.7
(22) Anmeldetag: 22.06.2007
(51) Int. Cl.: F16D 23/14

(54) **Kupplungssystem**
Clutch system
Système d'embrayage

(30) Priorität: 08.07.2006 DE 102006031703; 12.05.2007 DE 102007022317
(43) Veröffentlichungstag der Anmeldung: 30.04.2008
(73) Patentinhaber: ZF Friedrichshafen AG, 88038 Friedrichshafen (DE)
(72) Erfinder: Orlamünder, Andreas, 97453 Schonungen (DE); Müller, Thorsten, 88048 Friedrichshafen (DE); Matschas, Steffen, 97421 Schweinfurt (DE); Kühner, Michael, 97523 Schwanfeld (DE)

(56) Entgegenhaltungen:
- EP-A- 0 192 081
- EP-A- 1 688 634
- DE-A1-0102004 048 63
- DE-A1-7102005 029 34

## Beschreibung

Die vorliegende Erfindung betrifft ein Kupplungssystem, insbesondere Mehrscheibenkupplungssystem, umfassend ein mit einer Widerlagerplatte fest verbundenes oder verbindbares Gehäuse, in dem Gehäuse eine Anpressplatte, eine mit einer Abtriebswelle zur Drehung um eine Drehachse verbundene oder verbindbare Kupplungsscheibenanordnung, einen Kraftspeicher, welcher an einer Außenseite des Gehäuses angeordnet und bezüglich diesem abgestützt ist, wobei der Kraftspeicher die Anpressplatte an das Gehäuse durchgreifenden Beaufschlagungsbereichen beaufschlagt.

In modernen Antriebssystemen in Fahrzeugen werden zunehmend Mehrscheibenkupplungen, beispielsweise als Zweischeibenkupplungen ausgeführt, eingesetzt, um die immer größer werdenden Antriebsdrehmomente, die von Antriebsaggregaten geliefert werden, zuverlässig in den Antriebsstrang einleiten zu können. Die Bereitstellung einer Mehrzahl von Kupplungsscheibenbereichen erhöht durch deren Reibwechselwirkung mit der Anpressplatte, der oder den Zwischenplatten und einer Widerlagerplatte die wirksame Reibfläche und in entsprechendem Ausmaß auch das maximal übertragbare Drehmoment.

Bei derartigen Mehrscheibenkupplungen besteht das Problem, dass bei Einleitung der zum Ausrücken erforderlichen Ausrückkraft diese bei konventioneller Ausgestaltung der Ausrückersysteme an den Lagern einer Antriebswelle, also beispielsweise einer Kurbelwelle einer Brennkraftmaschine, abgestützt werden. Dies führt über die Betriebslebensdauer hinweg zu einer massiven Belastung, teilweise Überlastung, dieser Lager.

Entsprechendes gilt auch bei herkömmlichen Einscheibenkupplungen, bei welchen zwar das Drehmoment über eine Kupplungsanordnung mit einem einzigen Kupplungsscheibenbereich übertragen wird, zur Übertragung grö-ßerer Drehmomente aber stärker dimensionierte Kraftspeicher eingesetzt werden.

Es ist die Aufgabe der vorliegenden Erfindung, ein Kupplungssystem bereitzustellen, das bei Erzeugung der zum Ausrücken erforderlichen Betätigungskraft eine von einem Antriebsaggregat im Wesentlichen entkoppelte Kraftabstützung ermöglicht.

Erfindungsgemäß wird diese Aufgabe gelöst durch ein Kupplungssystem, insbesondere Mehrscheibenkupplungssystem, umfassend ein mit einer Widerlagerplatte fest verbundenes oder verbindbares Gehäuse, in dem Gehäuse eine Anpressplatte, eine über eine gemeinsame Nabe mit einer Abtriebswelle zur Drehung um eine Drehachse verbundene oder verbindbare Kupplungsscheibenanordnung, einen Kraftspeicher, welcher an einer Außenseite des Gehäuses angeordnet und bezüglich diesem abgestützt ist, wobei der Kraftspeicher die Anpressplatte an das Gehäuse durchgreifenden Beaufschlagungsbereichen beaufschlagt, eine Ausrückeranordnung, welche über ein erstes Drehkopplungslager den Kraftspeicher beaufschlagt, wobei eine bei Beaufschlagung des Kraftspeichers über das erste Drehentkopplungslager erzeugte Reaktionskraft über ein zweites Drehentkopplungslager bezüglich des Gehäuses oder der Abtriebswelle oder eines die Abtriebswelle aufnehmenden Getriebegehäuses abstützbar ist.

Bei dem erfindungsgemäßen Kupplungssystem ist also dafür gesorgt, dass eine Reaktionskraftabstützung nicht in Richtung Antriebsaggregat bzw. Kurbelwelle desselben erfolgt, sondern durch Einführung des zweiten Drehentkopplungslagers über andere Systembereiche erfolgt, die nicht notwendigerweise zusammen mit dem Gehäuse der Kupplung rotieren.

Um eine Reaktionskraftabstützung innerhalb der Kupplung selbst erlangen zu können, wird vorgeschlagen, dass die Ausrückeranordnung eine zur Drehachse im Wesentlichen konzentrische Kraftübertragungshülse aufweist, über welche eine Ausrückkrafterzeugungseinheit bezüglich des Gehäuses abgestützt ist.

Dabei kann vorgesehen sein, dass das zweite Drehentkopplungslager zwischen der Kraftübertragungshülse und dem Gehäuse wirkt und dass die Kraftübertragungshülse mit der Ausrückkrafterzeugungseinheit wenigstens axial fest verbunden ist. Alternativ ist es möglich, dass das zweite Drehentkopplungslager zwischen der Kraftübertragungshülse und der Ausrückkrafterzeugungseinheit wirkt und dass die Kraftübertragungshülse mit dem Gehäuse wenigstens axial fest verbunden ist.

In besonders einfacher, gleichwohl jedoch sehr zuverlässig wirkender Art und Weise kann die Kraftübertragungshülse mit dem Gehäuse durch eine Bajonettverbindung verbunden sein. Auch eine Rastverbindung ist möglich, ebenso wie der Einsatz eines elastisch verformbaren Verbindungselements, das eine Kopplung zwischen der Kraftübertragungshülse und dem Gehäuse herstellt.

Als Alternative zum Einsatz einer Kraftübertragungshülse wird vorgeschlagen, dass an dem Gehäuse eine Ausrückkrafterzeugungseinheit der Ausrückeranordnung an deren Außenseite wenigstens teilweise axial übergreifende Abstützabschnitte vorgesehen sind. Dabei können die Abstützabschnitte beispielsweise integral mit dem Gehäuse ausgebildet sein. Bei einer hinsichtlich der einfacheren Zusammenfügbarkeit vorteilhaften Ausgestaltung ist es aber auch möglich, dass diese Abstützabschnitte von dem Gehäuse separat ausgebildet und daran befestigt sind.

Bei einer alternativen Ausgestaltungsform des erfindungsgemäßen Kupplungssystems wird vorgeschlagen, dass die Ausrückeranordnung eine an dem Getriebegehäuse festgelegte oder festlegbare Kraftübertragungshülse umfasst, an welcher das Gehäuse über das zweite Drehentkopplungslager abgestützt oder abstützbar ist, sowie eine Ausrückkrafterzeugungseinheit, welche ein an dem Getriebegehäuse abgestütztes oder abstützbares Kraftübertragungselement umfasst. Hier findet also die Reaktionsskraftabstützung bezüglich des Getriebegehäuses statt, so dass auch hier irgendwelche sich drehende Wellen abstützende Lagerbereiche aus dem Kraftfluss der zum Betätigen der Kupplung erforderlichen Ausrückkraft herausgehalten werden können.

Bei einer weiteren alternativen Ausgestaltungsform ist es möglich, dass das Gehäuse radial innen einen Abstützbereich aufweist, der über das zweite Drehentkopplungslager an der Abtriebswelle axial abgestützt oder abstützbar ist.

Ferner kann gemäß einer Ausgestaltungsform des erfindungsgemäßen Kupplungssystems vorgesehen sein, dass das Gehäuse mit einer Widerlagerplatte fest verbunden oder verbindbar ist und dass die Widerlagerplatte über das zweite Drehentkopplungslager an der Abtriebswelle axial abgestützt oder abstützbar ist.

Um das erfindungsgemäße Kupplungssystem als Mehrscheibenkupplungssystem auszugestalten, wird vorgeschlagen, dass die Kupplungsscheibenanordnung eine Mehrzahl von über eine gemeinsame Nabe mit der Antriebswelle zur Drehung um eine Drehachse verbundene oder verbindbare Kupplungsscheibenbereiche umfasst, wobei jeweils zwischen zwei Kupplungsscheibenbereichen eine Zwischenplatte vorgesehen ist.

Die vorliegende Erfindung wird nachfolgend mit Bezug auf die beiliegenden Zeichnungen detailliert beschrieben. Es zeigt:
- Fig. 1: ein erfindungsgemäßes Kupplungssystem gemäß einer ersten Ausgestaltungsform im Längsschnitt;
- Fig. 2: eine alternative Ausgestaltungsform eines erfindungsgemäßen Kupplungssystems;
- Fig. 3: eine weitere alternative Ausgestaltungsform eines Kupplungssystems;
- Fig. 4: in Axialansicht den radial inneren Bereich eines Kupplungsgehäuses;
- Fig. 5: eine Abwandlung der in Fig. 3 gezeigten Ausgestaltungsform;
- Fig. 6: eine weitere Abwandlung der in Fig. 3 gezeigten Ausgestaltungsform;
- Fig. 7: in Axialansicht ein elastisch verformbares Verbindungselement der in Fig. 6 gezeigten Ausgestaltungsform;
- Fig. 8: eine weitere alternative Variante eines Kupplungssystems;
- Fig. 9: eine Axialansicht eines Teilbereichs einer Abstützhülse;
- Fig. 10: eine Abwandlung der in Fig. 8 dargestellten Ausgestaltungsform;
- Fig. 11: eine weitere alternative Variante eines Kupplungssystems;
- Fig. 12: eine Abwandlung der in Fig. 11 dargestellten Ausgestaltungsform;
- Fig. 13: eine weitere alternative Ausgestaltungsform eines Kupplungssystems;
- Fig. 14: eine Abwandlung der in Fig. 13 dargestellten Ausgestaltungsform.

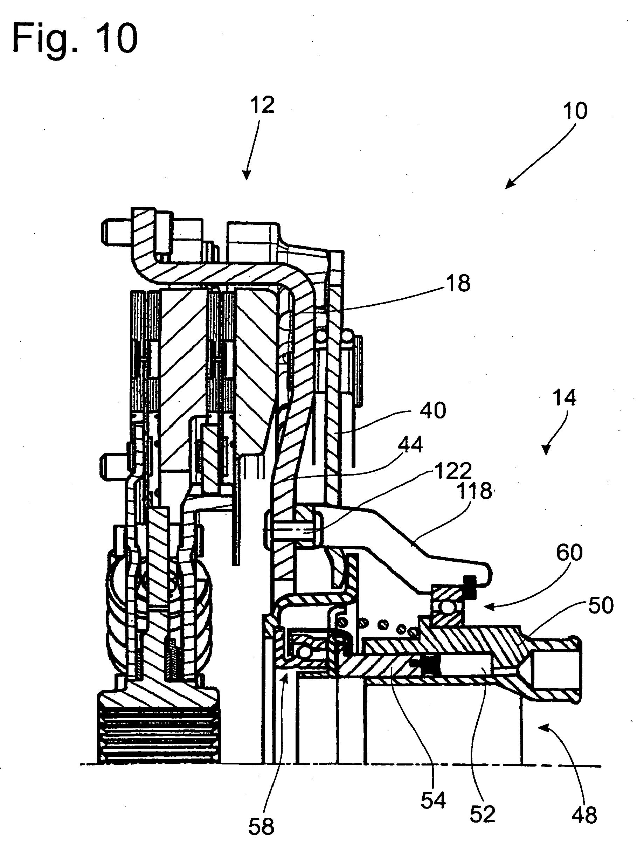

Nachfolgend werden mit Bezug auf die Figuren verschiedene Ausgestaltungsformen jeweiliger als Mehrscheibenkupplungssysteme ausgestalteter erfindungsgemäß aufgebauter Kupplungssysteme beschrieben. Dabei umfasst das in Fig. 10 gezeigte Mehrscheibenkupplungssystem 10 als seine zwei wesentlichen Systembereiche eine Mehrscheibenkupplung 12, hier in Form einer Zweischeibenkupplung, sowie eine Ausrückeranordnung 14, durch welche die Zweischeibenkupplung 12 zur Durchführung von Ein- bzw. Auskuppelvorgängen betätigt werden kann.

Die Zweischeibenkupplung 12 umfasst eine Widerlagerplatte 16, die beispielsweise die Sekundärmasse eines Zwei-Massen-Schwungrads bilden kann oder aber auch direkt an eine antreibende Welle, wie z. B. eine Kurbelwelle einer Brennkraftmaschine, angebunden werden kann. Radial außen ist mit dieser Widerlagerplatte 16 ein Gehäuse 18 durch Schraubbolzen 20 fest verbunden. In dem von dem Gehäuse 18 und der Widerlagerplatte 16 umgebenen Volumen ist eine Anpressplatte 22 angeordnet, ebenso wie eine zwischen der Anpressplatte 22 und der Widerlagerplatte 16 positionierte Zwischenplatte 24. Die Anpressplatte 22 und die Zwischenplatte 24 sind grundsätzlich in Richtung einer Kupplungsdrehachse A bewegbar, sind jedoch bezüglich des Gehäuses 18 bzw. der Widerlagerplatte 16 im Wesentlichen drehfest gehalten. Dies kann beispielsweise durch zwischen der Widerlagerplatte 16 bzw. dem Gehäuse 18 und der Zwischenplatte 24 wirkende Tangentialblattfedern einerseits und zwischen der Zwischenplatte 24 und der Anpressplatte 22 wirkende Tangentialblattfedern andererseits erfolgen, wobei diese Tangentialblattfedern gleichzeitig auch eine die Anpressplatte 22 bzw. die Zwischenplatte 24 axial beaufschlagende Kraftwirkung beispielsweise in Richtung von der Widerlagerplatte 16 weg oder auch auf diese zu bereitstellen können.

Eine Kupplungsscheibenanordnung 26 umfasst radial innen eine Nabe 28, die mit einer Getriebeeingangswelle drehfest, jedoch axial bewegbar gekoppelt werden kann. Über einen Torsionsschwingungsdämpfer 30 sind zwei Kupplungsscheibenbereiche 32, 34 mit der Nabe 28 gekoppelt. Jeder der Kupplungsscheibenbereiche 32, 34 umfasst Reibbeläge 36, 38, wobei die Reibbeläge 36 des Kupplungsscheibenbereichs 32 zwischen der Widerlagerplatte 16 und der Zwischenplatte 24 positioniert sind und die Reibbeläge 38 des Kupplungsscheibenbereichs 34 zwischen der Zwischenplatte 34 und der Anpressplatte 22 positioniert sind. Durch die Ankopplung der beiden Kupplungsscheibenbereiche 32, 34 an den Torsionsschwingungsdämpfer 30 ist auch dafür gesorgt, dass diese beiden Kupplungsscheibenbereiche 32, 34 sich zur Durchführung von Einkuppelvorgängen bzw. Auskuppelvorgängen bezüglich einander in Richtung der Drehachse A bewegen können.

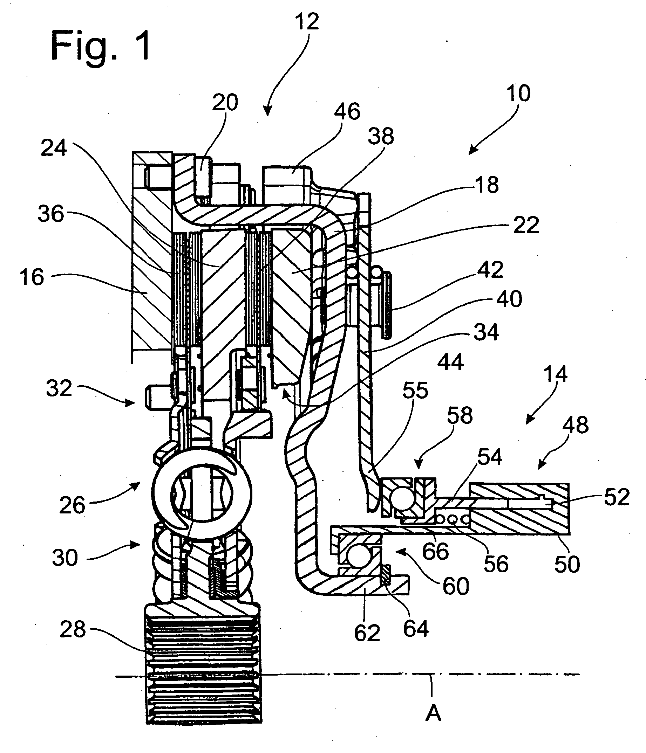

Um die im Einrückzustand erforderliche Einrückkraft bereitzustellen, ist ein beispielsweise in Form einer Membranfeder ausgestalteter Kraftspeicher 40 vorgesehen. Dieser ist über Distanzbolzen 20 oder dergleichen bezüglich des Gehäuses 18 in axialer Richtung abgestützt und ist, wie in Fig. 1 erkennbar, an der von der Widerlagerplatte 16 abgewandt positionierten oder zu positionierenden Seite eines Bodenbereichs 44 des Gehäuses 18 angeordnet. Die Anpressplatte 22 weist in ihrem radial äußeren Bereich an mehreren Umfangsabschnitten Beaufschlagungsbereiche 46 auf, welche Aussparungen im Gehäuse 18 durchsetzen und durch den radial äußeren Bereich des Kraftspeicher 40 beaufschlagt werden. Durch die vorgespannte Einbaulage des Kraftspeichers 40 wird somit die Anpressplatte 22 in Richtung auf die Widerlagerplatte 16 zu gepresst, so dass die Reibbeläge 36, 38 der beiden Kupplungsscheibenbereiche 32, 34 zwischen der Widerlagerplatte 16, der Zwischenplatte 24 und der Anpressplatte 22 eingeklemmt werden.

Die Ausrückeranordnung 14 umfasst in der in Fig. 1 dargestellten Ausgestaltungsvariante ein Geberzylinder/Nehmerzylinder-System 48. In Fig. 1 ist dabei der Nehmerzylinder 50 mit einem um die Drehachse A sich ringartig erstreckenden Zylinderraum 52 erkennbar. In diesem Zylinderraum 52 ist ein ebenfalls ringartig ausgestalteter Kolben 54 axial verschiebbar, wobei eine Vorspannfeder 56 den Kolben 54 in Richtung auf den radial inneren Bereich des Kraftspeichers 40 zu vorspannt.

Zwischen dem Kolben 54 und dem radial inneren Bereich 55 des Kraftspeichers 40 ist ein erstes Drehentkopplungslager 58 vorgesehen, das dafür sorgt, dass im Rotationsbetrieb, bei dem der Kraftspeicher 40 sich zusammen mit dem Gehäuse 18 um die Drehachse A drehen wird, der Nehmerzylinder 50 mit dem Kolben 54 sich nicht mitdrehen wird bzw. muss.

Die zur Durchführung von Betätigungsvorgängen erforderliche Reaktionskraftabstützung erfolgt über ein zweites Drehentkopplungslager 60. Dieses ist in axialer Richtung an einem radial innen am Bodenbereich 44 des Gehäuses 18 ausgebildeten zylindrischen Ansatz 62 und einem dort vorgesehenen Sicherungsring 64 abgestützt. Ferner ist ein hülsenartiger Verlängerungsbereich 66, der mit dem Zylinder integral ausgebildet oder daran festgelegt sein kann, an der anderen axialen Seite an dem zweiten Drehentkopplungslager 60 abgestützt, so dass bei Einleitung von Druckfluid in die Zylinderkammer 50 und dabei erfolgender Verlagerung des Kolbens 54 auf das Gehäuse 18 zu der Nehmerzylinder 50 in Richtung vom Gehäuse 18 weg abgestützt ist. Es erfolgt somit bei einem derartigen Ausrückvorgang ein Kraftrückschluss zwischen den beiden Drehentkopplungslagern 58 und 60 über den Kraftspeicher 40, die Distanzbolzen 42 und den Bodenbereich 44 des Gehäuses 18. Andere Systemkomponenten, insbesondere eine Kurbelwelle eines Antriebsmotors, werden von derartigen Reaktionskräften bei Durchführung von Einrückvorgängen und Ausrückvorgängen frei gehalten.

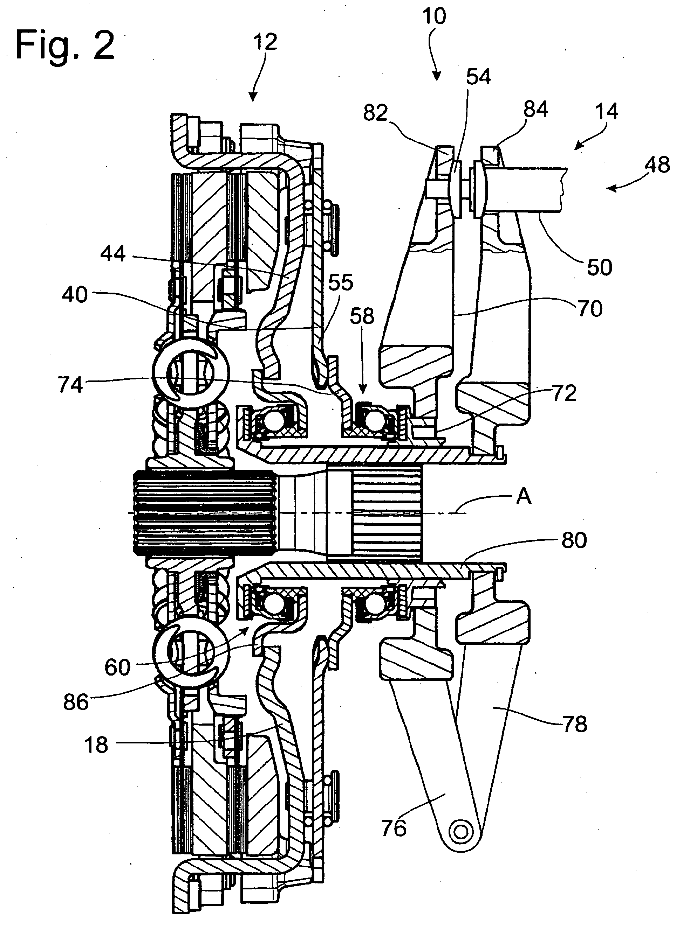

In Fig. 2 ist eine weitere Ausgestaltungsform eines Mehrscheibenkupplungssystems dargestellt. Dabei entspricht der Systembereich Mehrscheibenkupplung bzw. Zweischeibenkupplung 12 im Wesentlichen dem vorangehend Beschriebenen, so dass hier nicht weiter auf den Aufbau eingegangen werden muss. Die Ausrückeranordnung 14 umfasst einen Ausrückhebel 70, der in seinem bezüglich der Drehachse A zentralen Bereich einen ersten Ausrückring 72 axial beaufschlagen kann. Dieser erste Ausrückring 72 ist über das erste Drehentkopplungslager 58 an einem zweiten Ausrückring 74 axial abgestützt, der wiederum den radial inneren Bereich 55 des Kraftspeichers 40 belasten kann. Der Ausrückhebel 70 ist in einem Endbereich 76 schwenkbar an einem Reaktionskraftabstützelement 78 angebracht. Dieses Reaktionskraftabstützelement 78 ist in seinem der Drehachse nahen, zentralen Bereich axial mit einer Kraftübertragungshülse 80 verbunden. Die beiden anderen Endbereiche 82, 84 des Ausrückhebels 70 und des Reaktionskraftabstützelements 78 liegen sich näherungsweise gegenüber, und ein Nehmerzylinder 50 eines Geberzylinder/Nehmerzylinder-Systems 48 wirkt zwischen diesen beiden Endbereich 82, 84, so dass diese bei Beaufschlagung mit einem Druckfluid in näherungsweise axialer Richtung voneinander weg gepresst werden.

Die Kraftübertragungshülse 80 ist in ihrem dem Gehäuse 18 nahe liegenden Endbereich über ein zweites Drehentkopplungslager 60 und ein ringartiges Abstützelement 86 am radial inneren Bereich des Gehäuses 18 in Richtung von der in Fig. 2 nicht dargestellten Widerlagerplatte 16 weg abgestützt. Bei Erzeugung einer Betätigungskraft durch Einleiten eines Druckfluids in den Nehmerzylinder 50 bewegt sich also der Kolben 54 aus dem Zylinder 50 heraus und presst somit das Ende 82 des Ausrückhebels 70 in Richtung auf das Gehäuse 18 zu. Durch die axiale Abstützung des Reaktionskraftabstützelements 78 an der Kraftübertragungshülse 80 und deren Abstützung über das zweite Drehentkopplungslager 60 am Gehäuse 18 verschwenkt nunmehr bei derartiger Druckfluideinleitung der Ausrückhebel 70 und presst somit über die beiden Ausrückringe 72, 74 und das erste Drehentkopplungslager 58 den radial inneren Bereich 55 des Kraftspeichers 40 in Richtung auf den Bodenbereich 44 des Gehäuses 18 zu, wodurch die Zweischeibenkupplung 12 in ihren Ausrückzustand gebracht wird.

Bei dieser Ausgestaltungsform ist also, ähnlich wie bei der vorangehend dargestellten, eine Kraftübertragungshülse 80 vorhanden, welche die Reaktionskraftabstützung über das Gehäuse 18 und somit die Mehrscheibenkupplung 12 selbst ermöglicht, so dass auch hier andere Systembereiche, wie z. B. ein Zwei-Massen-Schwungrad oder eine Kurbelwelle, aus dem Kraftschluss heraus gehalten werden können. Vor allem erfolgt der Kraftrückschluss über vergleichsweise axial steife Baukomponenten, so dass eine exakte Umsetzung der eingeleiteten Kraft in einen entsprechenden Betätigungsweg in der Kupplung gewährleistet werden kann. Da bei beiden vorangehend beschriebenen Ausgestaltungsformen der Nehmerzylinder wirkungsmäßig zwischen dem Gehäuse und dem Kraftspeicher angeordnet bzw. positioniert ist, spielt die exakte axiale Positionierung im Neuzustand keine Rolle.

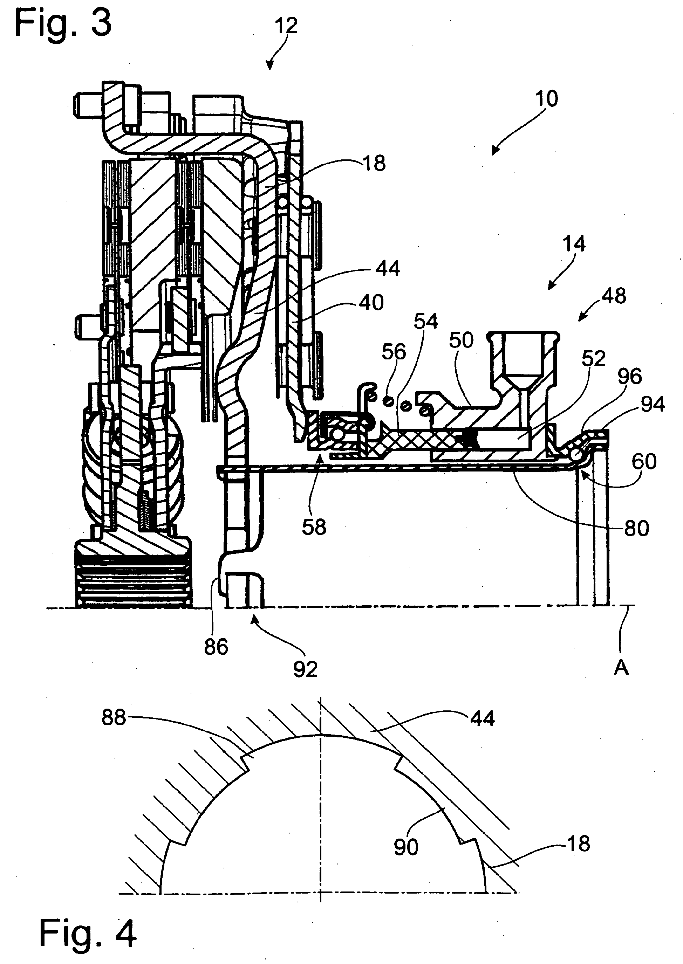

Auch in Fig. 3 ist eine Ausgestaltungsform gezeigt, bei welcher die Ausrückeranordnung 14 eine Kraftübertragungshülse 80 zur Reaktionskraftabstützung bezüglich des Bodenbereichs 44 des Gehäuses 18 verwendet. Man erkennt hier, dass die Kraftübertragungshülse 80 wieder den axialen Bereich des Nehmerzylinders 50 des Geberzylinder/Nehmerzylinder-Systems 48 überbrückt. Hier ist jedoch das zweite Drehentkopplungslager 60 wirkungsmäßig zwischen dem Nehmerzylinder 50 und der Kraftübertragungshülse 80 angeordnet, während nunmehr die Kraftübertragungshülse 80 mit dem Gehäuse 18 fest verbunden ist. Hierzu ist die Kraftübertragungshülse 80 in ihrem dem Bodenbereich 44 nahe liegend zu positionierenden Bereich mit in Umfangsrichtung sich erstreckenden Hakenabschnitten 86 ausgebildet, die beim Zusammenfügen des Systems am radial inneren Bereich des Bodenbereichs 44 des Gehäuses 18 in dort gebildete Umfangsaussparungen 88 eingefügt werden. Ein Drehen der Kraftübertragungshülse 80 um die Drehachse A sorgt dann dafür, dass diese Haken 86 entsprechende Abschnitte 90 am Gehäuse 18 hintergreifen und somit eine Bajonettverbindung 92 realisieren.

Von besonderem Vorteil ist bei der in den Fig. 3 und 4 gezeigten Ausgestaltungsform nicht nur die einfache Herstellbarkeit der festen Anbindung der Kraftübertragungshülse 80 an das Gehäuse 18, sondern auch, dass eine Lagerlauffläche für die Wälzkörper 94 des zweiten Drehentkopplungslagers 60 direkt in die Kraftübertragungshülse 80 eingeformt ist. Die zweite Lagerlauffläche ist an einem Lagerring 96 gebildet, der dann axial am Nehmerzylinder 50 abgestützt ist. Dies realisiert eine sehr einfache und kostengünstige Herstellbarkeit bei sehr kleiner Baugröße des Lagers. Ferner kann der dargestellte Bereich der Ausrückeranordnung 14 ohne wesentliche Änderungen an der Zweischeibenkupplung 12 als vormontierte Baugruppe an diese angesetzt werden.

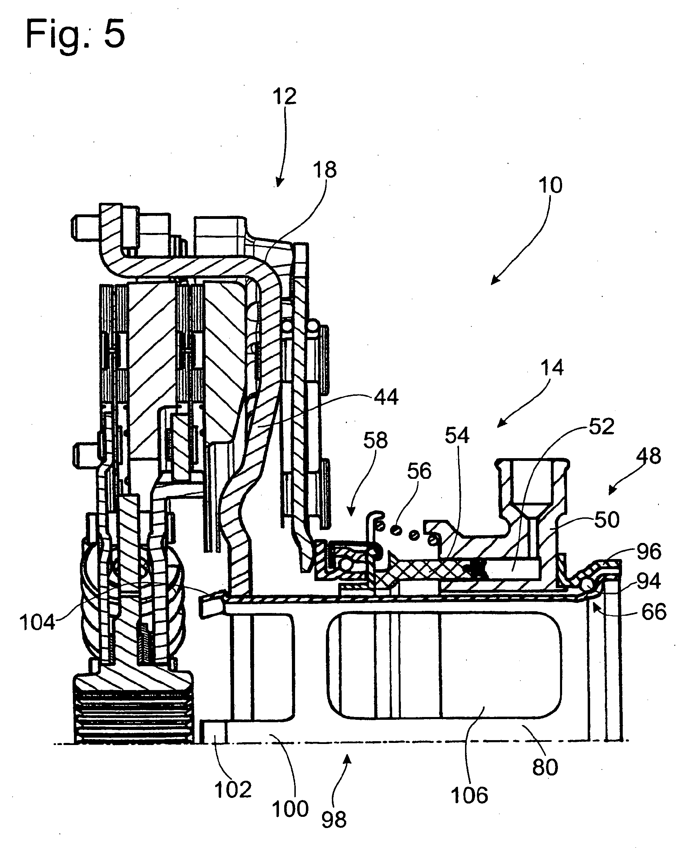

In Fig. 5 ist eine Abwandlung insofern gezeigt, als die Kraftübertragungshülse 80 mit dem Bodenbereich 44 des Gehäuses 18 durch eine Rastverbindung 98 verbunden ist. Hierzu weist die Kraftübertragungshülse 80 in ihrem dem Gehäuse 18 nahe zu positionierenden Endbereich mehrere näherungsweise axial sich erstreckende Rastlaschen 100 mit nach radial außen vorspringenden Rasthaken 102 auf. Diese werden beim axialen Heranführen der Kraftübertragungshülse 80 bzw. der Ausrückeranordnung 14 durch daran auch vorgesehene Abweisschrägen 104 durch den radial inneren Randbereich des Gehäuses 18 zunächst nach radial innen vorgespannt, wobei dann, wenn die axiale Dicke des Bodenbereichs 44 überfahren worden ist, aufgrund der Elastizität der Rastvorsprünge 100 die Rasthaken 102 nach radial außen federn und somit das Gehäuse 18 an seiner Innenseite hintergreifen. Dadurch ist in sehr einfacher Art und Weise wieder ein Kraftrückschluss innerhalb des Systems 10 selbst realisiert. Ferner können hier, ebenso wie bei den anderen dargestellten Ausgestaltungsformen, in der Kraftübertragungshülse 80 Aussparungen 106 vorgesehen sein, was zu einer Gewichtseinsparung führt. Auch ist damit eine bessere Durchlüftbarkeit des Innenbereichs der Zweischeibenkupplung 12 gewährleistet.

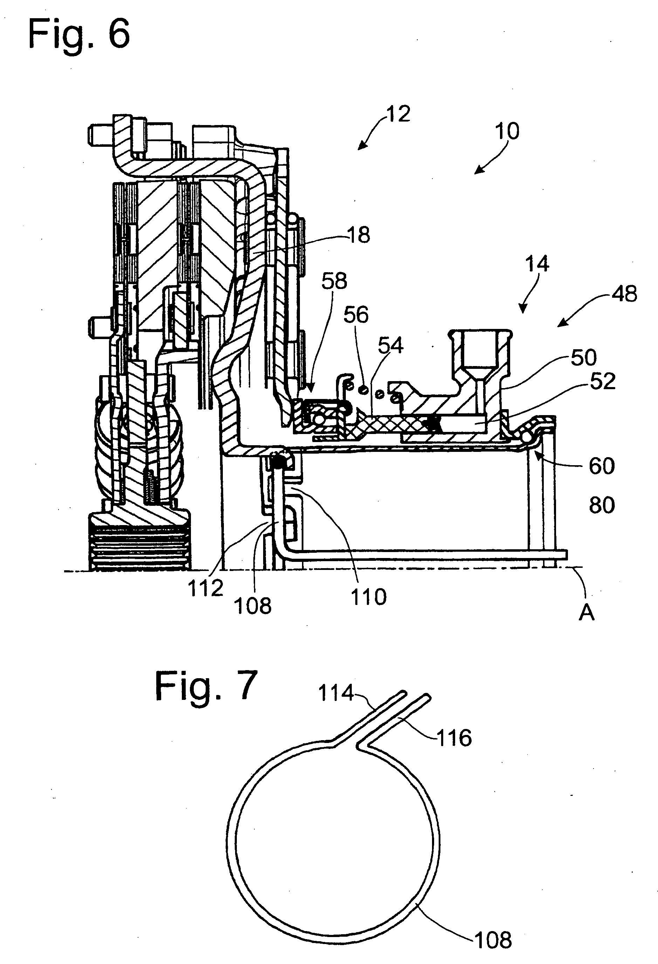

Bei der in Fig. 6 dargestellten Ausgestaltungsvariante ist die feste Kopplung der Kraftübertragungshülse 80 mit dem Gehäuse 18 über einen elastisch verformbaren Verbindungsring 108 vorgesehen. Die Kraftübertragungshülse 80 und das Gehäuse weisen in Umfangsrichtung aufeinander folgend jeweils axial vorspringende und dann nach radial innen sich erstreckende Verbindungsabschnitte 110, 112 auf, die so positioniert sind, dass, wie in Fig. 6 erkennbar, bei entsprechendem axialen Heranführen der Kraftübertragungshülse 80 ein Verbindungsabschnitt 110 in Umfangsrichtung auf einen Verbindungsabschnitt 112 folgt. Zwischen die sich nach radial innen erstreckenden Endbereiche ist dann der Verbindungsring 108 eingefügt, wobei dieses Einfügen dadurch erfolgen kann, dass der Ring an einem Umfangsbereich offen ist und über Betätigungsabschnitte 114, 116 zur Bereitstellung eines Zustandes mit geringerem Durchmesser zunächst zusammengepresst ist. Ist der Ring an seiner axial korrekten Positionierung, kann er freigegeben werden und nach dem Entspannen dann die axial und auch radial feste Verbindung zwischen der Kraftübertragungshülse 80 und dem Gehäuse 18 realisieren. Neben der durch den Ring realisierten axialen und radialen Kopplung sind das Gehäuse 18 und die Kraftübertragungshülse 80 durch die ineinander eingreifenden Abschnitte 110, 112 auch im Wesentlichen drehfest miteinander gekoppelt.

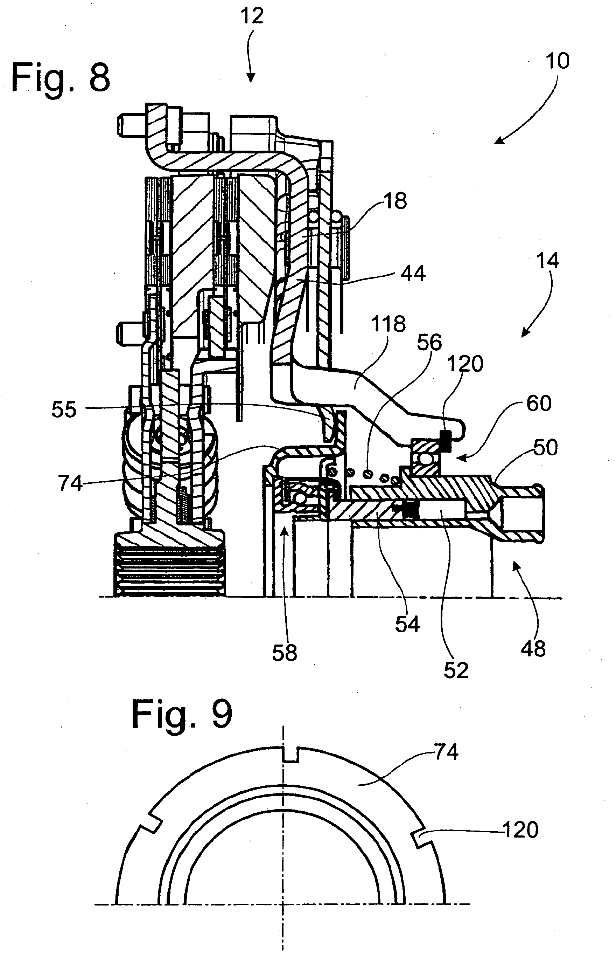

Bei der in Fig. 8 gezeigten Ausgestaltungsform sind am radial inneren Endbereich des Bodenbereichs 44 des Gehäuses 18 mehrere durch entsprechendes Abbiegen sich näherungsweise in Achsrichtung erstreckende Abstützabschnitte 118 vorgesehen. Diese sind mit dem Gehäuse 18 integral ausgebildet und stützen über das zweite Drehentkopplungslager 60 bzw. einen Sicherungsring 120 den Nehmerzylinder 50 der Ausrückeranordnung 14 axial in Richtung vom Gehäuse 18 bzw. der hier nicht dargestellten Widerlagerplatte 16 weg ab. Der Kolben 54 beaufschlagt über das erste Drehentkopplungslager 58 den hier im Wesentlichen topfartig gestalteten Ausrückring 74, wobei vor allem durch diese topfartige Ausgestaltung dieses Ausrückrings 74 eine Anordnung geschaffen wird, bei welcher der Nehmerzylinder 50 bzw. der Kolben 54 mit dem ersten Drehentkopplungslager 58 axial stärker in den Bereich der Zweischeibenkupplung 12 eingreift, um eine platzsparende Anordnung zu schaffen. Man erkennt in Fig. 9, dass der Ausrückring 74 an mehreren Umfangspositionierungen radial nach außen offene Aussparungen 120 aufweist, die es ermöglichen, diesen Ausrückring 74 axial an den radial inneren Bereich 55 des Kraftspeichers 40 heranzuführen, ohne sich gegenseitig mit den auch in diesem radialen Bereich liegenden Abstützabschnitten 118 zu stören.

Ein weiterer Vorteil dieser Ausgestaltungsform ist, dass die zu dem Zylinderraum 52 führende Druckleitung axial an den Zylinder 50 herangeführt werden kann, während bei der vorangehend beschriebenen Ausgestaltungsform hierfür aufgrund der Positionierung des zweiten Drehentkopplungslagers 60 eine radiale Heranführung vorgesehen ist.

In Fig. 10 ist eine Abwandlung der vorangehend beschriebenen Ausgestaltungsform dargestellt, bei welcher die vom Gehäuse 18 sich weg erstreckenden Abstützabschnitte 118 nicht mit dem Gehäuse 18 integral ausgebildet sind, sondern beispielsweise durch Nietbolzen 122 daran festgelegt sind. Dies vereinfacht den Herstellungsvorgang vor allem des Gehäuses 18. Auch wird es somit möglich, diese zwischen die einzelnen Federzungen des Kraftspeichers 40 einzufügenden bzw. dort hindurchzuführenden Abstützabschnitte 118 nachträglich zusammen mit der Ausrückeranordnung 14 anzubringen. Hierfür können neben dem bereits angesprochenen Nietbolzen 122 selbstverständlich auch Schraubbolzen eingesetzt werden, die in im Gehäuse 18 vorgesehene Gewindeöffnungen eingeschraubt werden.

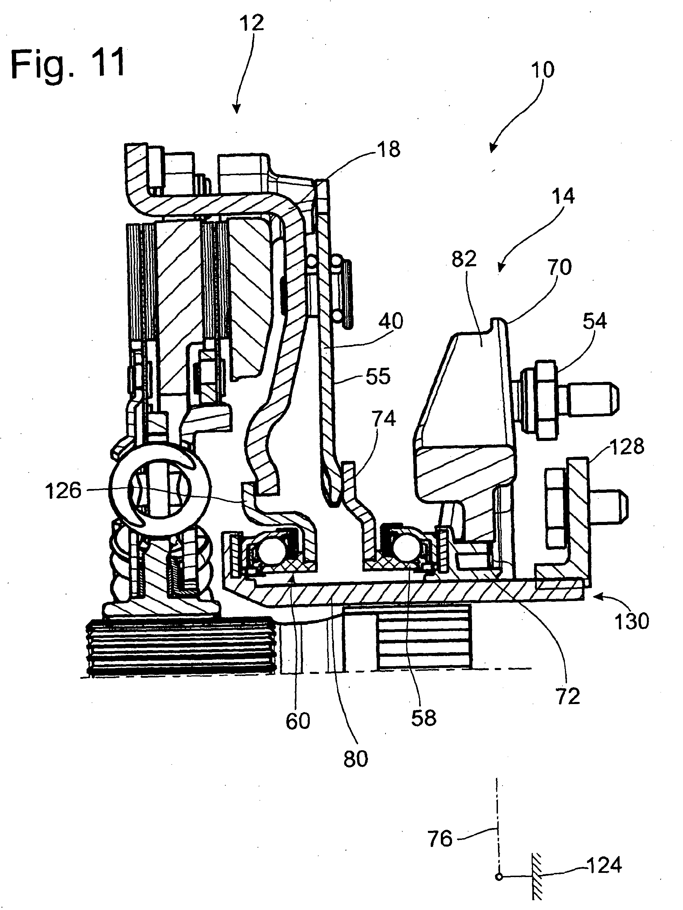

In Fig. 11 ist eine Ausgestaltungsform gezeigt, bei welcher die Reaktionskraftabstützung bei Betätigung der Zweischeibenkupplung 12 nicht über einen Kraftrückschluss innerhalb des Kupplungssystems 10 selbst erfolgt, sondern durch Abstützung an einer externen Komponente, wie z. B. einem nur schematisch dargestellten Getriebegehäuse 124. Man erkennt, dass die Ausrückeranordnung 14 hier wieder den vorangehend mit Bezug auf die Ausgestaltungsform gemäß Fig. 2 bereits beschriebenen Ausrückhebel 70 umfasst. Dieser ist in seinem Endbereich 82 wieder durch einen nur schematisch angedeuteten Kolben 54 eines Nehmerzylinders axial in Richtung auf die Zweischeibenkupplung 12 zu beaufschlagbar. In einem anderen nur prinzipiell dargestellten Endbereich 76 ist der Ausrückhebel 70 an dem Getriebegehäuse 124 schwenkbar abgestützt. In seinem radial mittleren Bereich beaufschlagt er wiederum den Ausrückring 72 und über diesen und das erste Drehentkopplungslager 58 den Ausrückring 74. Dabei ist selbstverständlich auch der nicht weiter dargestellte Nehmerzylinder 50 beispielsweise bezüglich des Getriebegehäuses 124 abgestützt. Eine Kraftübertragungshülse 80 ist in ihrem der Zweischeibenkupplung 12 nahen Endbereich über das zweite Drehentkopplungslager 60 und einen Abstützring 126 am Gehäuse 18 axial abgestützt, und ist in seinem anderen axialen Endbereich über ein Verbindungselement 128 am Getriebegehäuse 124 abgestützt. Zwischen der Kraftübertragungshülse 80 und dem Verbindungselement 128 kann, wie in Fig. 11 angedeutet, eine Schraubverbindung 130 bestehen, um hier die axial feste Kopplung zu schaffen. Bei Krafteinleitung zum Ausrücken der Zweischeibenkupplung wird also der Ausrückhebel 70 verschwenkt, wodurch der Ausrückring 72, das erste Drehentkopplungslager 58 und der Ausrückring 74 axial auf das Gehäuse 18 zu verschoben werden. Bei dieser Beaufschlagung stützt sich dann das Gehäuse 18 über den Abstützring 126, das zweite Drehentkopplungslager 60, die Kraftübertragungshülse 80 und das Verbindungselement 128 am Getriebegehäuse 124 axial ab. Somit ist eine Kraftrückkopplung über das Getriebegehäuse 124 geschaffen, und es können verschiedene rotierende Bauteile, insbesondere die Kurbelwelle, von axialen Betätigungskräften freigehalten werden.

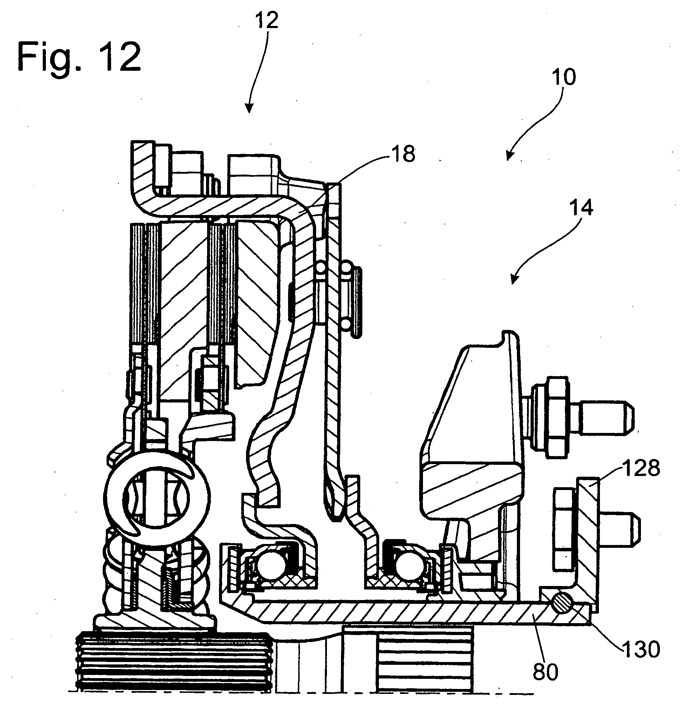

Es ist selbstverständlich, dass die Anbindung der Kraftübertragungshülse 80 an das Getriebegehäuse 124 in anderer Weise erfolgen kann. So kann beispielsweise anstelle des Verbindungselements 128 am Getriebegehäuse 124 selbst ein entsprechender Gewindeansatz vorgesehen sein. Auch ist es möglich, die in Fig. 12 dargestellte Art der Anbindung vorzusehen, bei welcher sowohl im Verbindungselement 128 als auch in der Kraftübertragungshülse 80 gemeinsam einen kreisrunden Querschnitt bereitstellende Aussparungen bereitgestellt sind, in welche ein beispielsweise U-förmiger Drahtbügel 130 eingeführt wird. Auf diese Art und Weise ist durch das Aufbrechen der ansonsten vorhandenen Rotationssymmetrie sowohl eine axial feste, als auch eine in Umfangsrichtung feste Kopplung zwischen dem Verbindungselement 128 und der Kraftübertragungshülse 80 vorgesehen. Ansonsten entspricht die in Fig. 12 dargestellte Ausgestaltungsform hinsichtlich Aufbau und Funktion der vorangehend mit Bezug auf die Fig. 11 beschriebenen.

Ein wesentlicher Vorteil dieser Ausgestaltungsformen ist, dass herkömmliche Ausrückeranordnungen 14 eingesetzt werden können, um auch eine Zweischeibenkupplung zu betätigen. Die Art und Weise der Ankopplung, insbesondere des Kraftrückschlusses über das Getriebegehäuse 124 führt zu einem sehr steifen Aufbau, der entsprechend exakte Betätigungsvorgänge mit sich bringt.

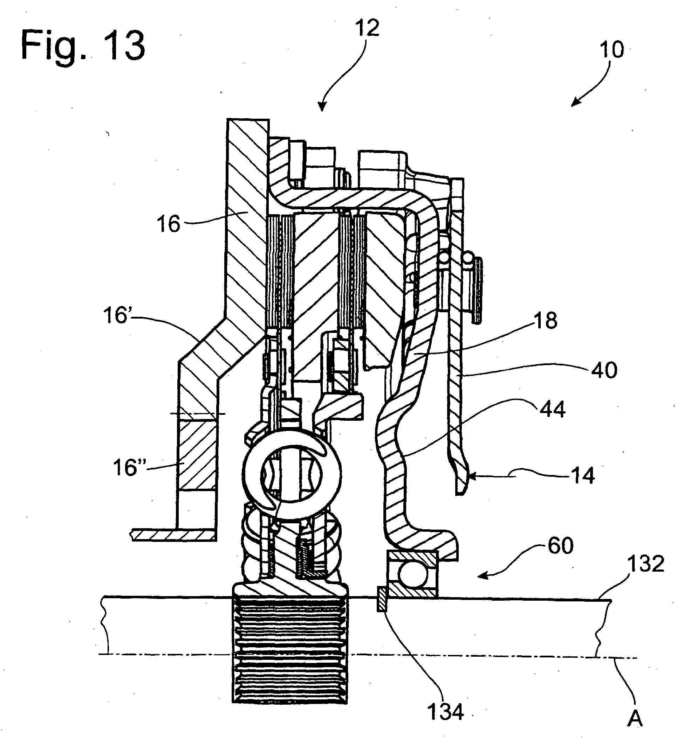

Bei der in Fig. 13 dargestellten Ausgestaltungsvariante erfolgt die Reaktionskraftabstützung über das Gehäuse 18 bzw. den sich über das zweite Drehentkopplungslager 60 an einer Getriebeeingangswelle 132 axial abstützenden Bodenbereich 44 des Gehäuses 18. An der Getriebeeingangswelle 132 ist ein diese axiale Abstützung zulassender Sicherungsring 134 vorgesehen. Bei Beaufschlagung vermittels der nur durch einen Kraftpfeil angedeuteten und sich z. B. am Getriebegehäuse abstützenden Ausrückeranordnung 14 presst der Kraftspeicher 40 durch seine Abstützung am Gehäuse 18 dieses axial in Richtung vom Getriebe weg und auf einen Antriebsmotor zu, wodurch auch das zweite Drehentkopplungslager 60 axial gegen den Sicherungsring 134 an der Getriebeeingangswelle gepresst wird.

Um bei dieser Ausgestaltungsart axiale Fertigungstoleranzen ausgleichen zu können, kann die Widerlagerplatte 16, welche, wie bereits ausgeführt, auch die Sekundärmasse eines Zwei-Massen-Schwungrads bilden kann, zweiteilig mit Teilen 16' und 16" ausgebildet sein, wobei diese beiden Teile 16' und 16" durch eine Verzahnung in Drehkopplungseingriff stehen, ansonsten jedoch in gewissem Ausmaß axial bezüglich einander bewegbar sind. Das Teil 16" ist dann entweder direkt oder über eine Dämpferelementenanordnung und eine Primärseite eines Torsionsschwingungsdämpfers an eine Kurbelwelle oder sonstige Antriebswelle anzubinden. Es ist selbstverständlich, dass eine derartige zweiteilige oder mehrteilige Ausgestaltung der Widerlagerplatte 16 auch bei den in den Fig. 11 und 12 dargestellten Ausgestaltungsvarianten vorgesehen sein kann, bei welchen ebenfalls eine axiale Abstützung und somit auch axial definierte Positionierung bezüglich einer externen Baugruppe, nämlich des Getriebegehäuses, realisiert ist.

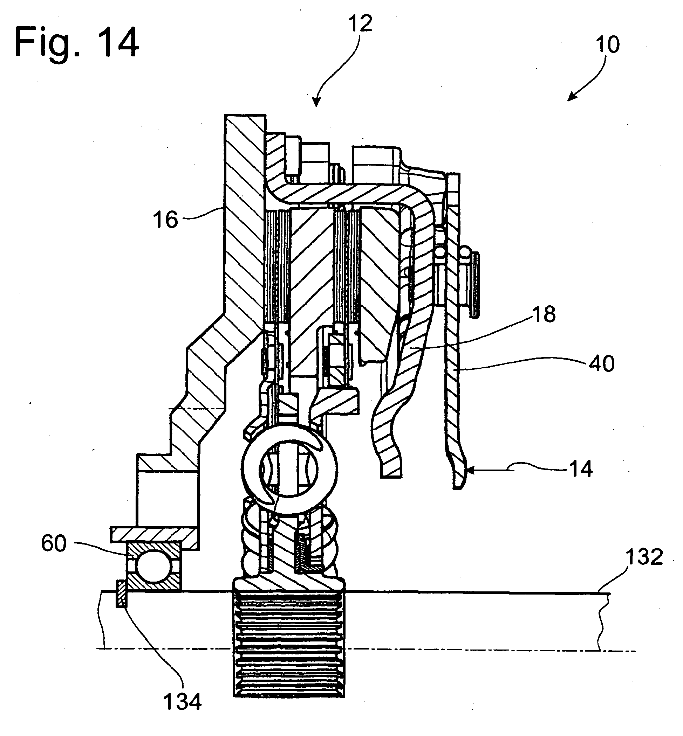

In Fig. 14 ist eine Abwandlung der Variante der Fig. 13 gezeigt. Man erkennt hier, dass nunmehr die axiale Abstützung an der Getriebeeingangswelle 132 über die Widerlagerplatte 16 erfolgt. Diese ist radial innen in axialer Richtung auf den Antriebsmotor zu vermittels des zweiten Drehentkopplungslager 60 und des Sicherungsrings 134 an der Getriebeeingangswelle 132 abgestützt. Die durch die nur schematisch angedeutete Ausrückeranordnung bereitgestellte axiale Betätigungskraft wird über den Kraftspeicher 40 und das Gehäuse 18 in die Widerlagerplatte 16 und über diese und das zweite Drehentkopplungslager 60 in die Getriebeeingangswelle 132 eingeleitet.

Es ist selbstverständlich, dass bei der in den Fig. 13 und 14 dargestellten Ausgestaltungsvarianten das eigentliche Kraft erzeugende System der Ausrückeranordnung 14 verschiedene Ausgestaltungsformen annehmen kann, die auch vorangehend beschrieben wurden. So kann ein Ausrückhebel ebenso verwendet werden, wie ein Nehmerzylinder. Die Abstützung und Drehentkopplung bezüglich des Kraftspeichers 40 wird dann wieder durch das erste Drehentkopplungslager 58 erfolgen.

Vorangehend ist die Erfindung mit Bezug auf ein als Mehrscheibenkupplungssystem gestaltetes Kupplungssystem beschrieben worden, also ein Kupplungssystem, bei welchem eine Kupplungsscheibenanordnung zumindest zwei Kupplungsscheibenbereiche aufweist, zwischen welche eine mit dem Gehäuse im Wesentlichen drehfeste Zwischenplatte eingreift. Diese Kupplungsscheibenbereiche sind mit der dazwischen angeordneten Zwischenplatte dann zwischen der Anpressplatte und der Widerlagerplatte einspannbar, um auf diese Art und Weise eine Drehmomentübertragungsverbindung zu erhalten. Die Prinzipien der vorliegenden Erfindung können jedoch auch Anwendung finden bei einem Kupplungssystem mit einer herkömmlichen Einscheibenkupplung, also einem Aufbau, bei welchem die Kupplungsscheibenanordnung lediglich einen zwischen einer Anpressplatte und einer Widerlagerplatte einspannbaren Kupplungsscheibenbereich mit jeweiligen Reibbelägen bzw. Reibflächen aufweist. Diese Reibbeläge bzw. Reibflächen können dann beispielsweise über eine Torsionsschwingungsdämpferanordnung und sonstige im Bereich von Kupplungsscheiben allgemein bekannte Baugruppen mit einer Nabe gekoppelt sein und über diese Nabe dann an eine Abtriebswelle, beispielsweise eine Getriebeeingangswelle angekoppelt werden. Die vorangehend hinsichtlich des Aufbaus der Ausrückeranordnung bzw. der Kraftrückkopplung beschriebenen Vorteile ergeben sich hier in entsprechender Art und Weise.

## Patentansprüche

1. Kupplungssystem, insbesondere Mehrscheibenkupplungssystem, umfassend
- ein mit einer Widerlagerplatte (16) fest verbundenes oder verbindbares Gehäuse (18),
- in dem Gehäuse (18) eine Anpressplatte (22),
- eine mit einer Antriebswelle (132) zur Drehung um eine Drehachse (A) verbundene oder verbindbare Kupplungsscheibenanordnung (26),
- einen Kraftspeicher (40), welcher an einer Außenseite des Gehäuses (18) angeordnet und bezüglich diesem abgestützt ist, wobei der Kraftspeicher (40) die Anpressplatte (22) an das Gehäuse (18) durchgreifenden Beaufschlagungsbereichen (46)beaufschlagt,
- eine Ausrückeranordnung (14), welche über ein erstes Drehkopplungslager (58) den Kraftspeicher (40) beaufschlagt, wobei eine bei Beaufschlagung des Kraftspeichers (40) über das erste Drehentkopplungslager (58) erzeugte Reaktionskraft über ein zweites Drehentkopplungslager (60) bezüglich des Gehäuses (18) oder der Abtriebswelle (132) oder eines die Abtriebswelle (132) aufnehmenden Getriebegehäuses (124) abstützbar ist.

2. Kupplungssystem nach Anspruch 1,
**dadurch gekennzeichnet, dass** die Ausrückeranordnung (14) eine zur Drehachse (A) im Wesentlichen konzentrische Kraftübertragungshülse (66; 80) aufweist, über welche eine Ausrückkrafterzeugungseinheit (48) bezüglich des Gehäuses (18) abgestützt ist.

3. Kupplungssystem nach Anspruch 2,
**dadurch gekennzeichnet, dass** das zweite Drehentkopplungslager (60) zwischen der Kraftübertragungshülse (80) und dem Gehäuse (18) wirkt und dass die Kraftübertragungshülse (80) mit der Ausrückkrafterzeugungseinheit (48) wenigstens axial fest verbunden ist.

4. Kupplungssystem nach Anspruch 2,
**dadurch gekennzeichnet, dass** das zweite Drehentkopplungslager (60) zwischen der Kraftübertragungshülse (80) und der Ausrückkrafterzeugungseinheit (48) wirkt und dass die Kraftübertragungshülse (80) mit dem Gehäuse (18) wenigstens axial fest verbunden ist.

5. Kupplungssystem nach Anspruch 4,
**dadurch gekennzeichnet, dass** die Kraftübertragungshülse (80) mit dem Gehäuse (18) durch eine Bajonettverbindung (92) verbunden ist.

6. Kupplungssystem nach Anspruch 4,
**dadurch gekennzeichnet, dass** die Kraftübertragungshülse (80) mit dem Gehäuse (18) durch eine Rastverbindung (98) verbunden ist.

7. Kupplungssystem-nach Anspruch 4,
**dadurch gekennzeichnet, dass** die Kraftübertragungshülse (80) mit dem Gehäuse (18) durch ein elastisch verformbares Verbindungselement (108) verbunden ist.

8. Kupplungssystem nach Anspruch 1,
**dadurch gekennzeichnet, dass** an dem Gehäuse (18) eine Ausrückkrafterzeugungseinheit (48) der Ausrückeranordnung (14) an deren Außenseite wenigstens teilweise axial übergreifende Abstützabschnitte (118) vorgesehen sind.

9. Kupplungssystem nach Anspruch 8,
**dadurch gekennzeichnet, dass** die Abstützabschnitte (118) mit dem Gehäuse (18) integral ausgebildet sind.

10. Kupplungssystem nach Anspruch 8,
**dadurch gekennzeichnet, dass** die Abstützabschnitte (118) an dem Gehäuse (18) befestigt sind.

11. Kupplungssystem nach Anspruch 1,
**dadurch gekennzeichnet, dass** die Ausrückeranordnung (14) eine an dem Getriebegehäuse (124) festgelegte oder festlegbare Kraftübertragungshülse (80) umfasst, an welcher das Gehäuse (18) über das zweite Drehentkopplungslager (60) abgestützt oder abstützbar ist, sowie eine Ausrückkrafterzeugungseinheit (54, 70), welche ein an dem Getriebegehäuse (124) abgestütztes oder abstützbares Kraftübertragungselement (70) umfasst.

12. Kupplungssystem nach Anspruch 1,
**dadurch gekennzeichnet, dass** das Gehäuse (18) radial innen einen Abstützbereich aufweist, der über das zweite Drehentkopplungslager (60) an der Abtriebswelle (132) axial abgestützt oder abstützbar ist.

13. Kupplungssystem nach Anspruch 1,
**dadurch gekennzeichnet, dass** das Gehäuse (18) mit einer Widerlagerplatte (16) fest verbunden oder verbindbar ist und dass die Widerlagerplatte (16) über das zweite Drehentkopplungslager (60) an der Abtriebswelle (132) axial abgestützt oder abstützbar ist.

14. Kupplungssystem nach einem der Ansprüche 1 bis 13,
**dadurch gekennzeichnet, dass** die Kupplungsscheibenanordnung (26) eine Mehrzahl von über eine gemeinsame Nabe (28) mit der Abtriebswelle (132) zur Drehung um eine Drehachse (A) verbundene oder verbindbare Kupplungsscheibenbereichen (32, 34) umfasst, wobei jeweils zwischen zwei Kupplungsscheibenbereichen (32, 34) eine Zwischenplatte (24) vorgesehen ist.

## Claims

1. Clutch system, in particularly multi-disc clutch system, comprising
- a housing (18) which is or can be fixedly connected to an abutment plate (16),
- a pressure plate (22) in the housing (18),
- a clutch disc arrangement (26) which is or can be connected to a drive input shaft (132) for rotation about a rotational axis (A),
- a force store (40) which is arranged on and supported with respect to an outer side of the housing (18), with the force store (40) acting on the pressure plate (22) at loading regions (46) which extend through the housing (18),
- a clutch operator arrangement (14) which acts via a first rotary coupling bearing (58) on the force store (40), with it being possible for a reaction force which is generated via the first rotary decoupling bearing (58) when the force store (40) is acted on to be supported via a second rotary decoupling bearing (60) with respect to the housing (18) or the drive output shaft (132) or a transmission housing (124) which holds the drive output shaft (132).

2. Clutch system according to Claim 1,
**characterized in that** the clutch operator arrangement (14) has a force transmission sleeve (66; 80) which is substantially concentric with respect to the rotational axis (A) and via which a release force generating unit (48) is supported with respect to the housing (18).

3. Clutch system according to Claim 2,
**characterized in that** the second rotary decoupling bearing (60) acts between the force transmission sleeve (80) and the housing (18), and **in that** the force transmission sleeve (80) is at least axially fixedly connected to the release force generating unit (48).

4. Clutch system according to Claim 2,
**characterized in that** the second rotary decoupling bearing (60) acts between the force transmission sleeve (80) and the release force generating unit (48), and **in that** the force transmission sleeve (80) is at least axially fixedly connected to the housing (18).

5. Clutch system according to Claim 4,
**characterized in that** the force transmission sleeve (80) is connected to the housing (18) by means of a bayonet connection (92).

6. Clutch system according to Claim 4,
**characterized in that** the force transmission sleeve (80) is connected to the housing (18) by means of a latching connection (98).

7. Clutch system according to Claim 4,
**characterized in that** the force transmission sleeve (80) is connected to the housing (18) by means of an elastically deformable connecting element (108) .

8. Clutch system according to Claim 1,
**characterized in that** support sections (118) which engage at least partially axially over the outside of a release force generating unit (48) of the clutch operator arrangement (14) are provided on the housing (18).

9. Clutch system according to Claim 8,
**characterized in that** the support sections (118) are integrally formed with the housing (18).

10. Clutch system according to Claim 8,
**characterized in that** the support sections (118) are fastened to the housing (18).

11. Clutch system according to Claim 1,
**characterized in that** the clutch operator arrangement (14) comprises a force transmission sleeve (80) which is or can be fixed to the transmission housing (124) and on which the housing (18) is or can be supported via the second rotary decoupling bearing (60), and a release force generating unit (54, 70) which comprises a force transmission element (70) which is or can be supported on the transmission housing (124).

12. Clutch system according to Claim 1,
**characterized in that** the housing (18) has, radially at the inside, a support region which is or can be supported axially on the drive output shaft (132) via the second rotary decoupling bearing (60) .

13. Clutch system according to Claim 1,
**characterized in that** the housing (18) is or can be fixedly connected to an abutment plate (16), and **in that** the abutment plate (16) is or can be supported axially on the drive output shaft (132) via the second rotary decoupling bearing (60).

14. Clutch system according to one of Claims 1 to 13,
**characterized in that** the clutch disc arrangement (26) comprises a plurality of clutch disc regions (32, 34) which are or can be connected by means of a common hub (28) to the drive output shaft (132) for rotation about a rotational axis (A), with an intermediate plate (24) being provided in each case between two clutch disc regions (32, 34).

## Revendications

1. Système d'embrayage, notamment système d'embrayage à disques multiples, comprenant
- un carter (18) relié ou susceptible d'être relié fixement (16) avec une plaque de butée,
- dans le carter (18), une plaque de serrage (22),
- un agencement de disques d'embrayage (26) relié ou susceptible d'être relié avec un arbre d'entraînement (132), pour la rotation autour d'un axe de rotation (A),
- un accumulateur d'énergie (40), qui est disposé sur une face extérieure du carter (18) et qui est soutenu par rapport à ce dernier, l'accumulateur d'énergie (40) sollicitant la plaque de serrage (22) sur des zones de sollicitation (46) traversant le carter (18),
- un agencement de débrayage (14), qui par l'intermédiaire d'un premier palier de désaccouplement tournant (58) sollicite l'accumulateur d'énergie (40), une force de réaction générée par l'intermédiaire du premier palier de désaccouplement tournant (58) étant susceptible d'être soutenue, en cas de sollicitation de l'accumulateur d'énergie (40), par rapport au carter (18) ou à l'arbre de sortie (132) ou à un carter de boîte de vitesses (124) réceptionnant l'arbre de sortie (132), par l'intermédiaire d'un deuxième palier de désaccouplement tournant (60).

2. Système d'embrayage selon la revendication 1,
**caractérisé en ce que** l'agencement de débrayage (14) comporte une douille de transmission de force (66 ; 80) sensiblement concentrique par rapport à l'axe de rotation (A), par l'intermédiaire de laquelle une unité de génération d'une force de débrayage (48) est soutenue par rapport au carter (18).

3. Système d'embrayage selon la revendication 2,
**caractérisé en ce que** le deuxième palier de désaccouplement tournant (60) agit entre la douille de transmission de force (80) et le carter (18) et **en ce que** la douille de transmission de force (80) est solidement reliée au moins en direction axiale avec l'unité de génération d'une force de débrayage (48) .

4. Système d'embrayage selon la revendication 2,
**caractérisé en ce que** le deuxième palier de désaccouplement tournant (60) agit entre la douille de transmission de force (80) et l'unité de génération d'une force de débrayage (48) et **en ce que** la douille de transmission de force (80) est solidement reliée au moins en direction axiale avec le carter (18).

5. Système d'embrayage selon la revendication 4,
**caractérisé en ce que** la douille de transmission de force (80) est reliée avec le carter (18) par un assemblage à baïonnette (92).

6. Système d'embrayage selon la revendication 4,
**caractérisé en ce que** la douille de transmission de force (80) est reliée avec le carter (18) par un assemblage par enclenchement (98).

7. Système d'embrayage selon la revendication 4,
**caractérisé en ce que** la douille de transmission de force (80) est reliée avec le carter (18) par un élément de liaison à déformation élastique (108).

8. Système d'embrayage selon la revendication 1,
**caractérisé en ce que** sur le carter (18) se trouve une unité de génération d'une force de débrayage (48) de l'agencement de débrayage (14), sur la face extérieure de laquelle sont prévues des sections de soutien (118) au moins partiellement chevauchantes en direction axiale.

9. Système d'embrayage selon la revendication 8,
**caractérisé en ce que** les sections de soutien (118) sont intégralement conçues avec le carter (18).

10. Système d'embrayage selon la revendication 8,
**caractérisé en ce que** les sections de soutien (118) sont fixées sur le carter (18).

11. Système d'embrayage selon la revendication 1,
**caractérisé en ce que** l'agencement de débrayage (14) comprend une douille de transmission de force (80) fixée ou susceptible d'être fixée sur le carter de boîte de vitesses (124), sur laquelle le carter (18) est soutenu ou susceptible d'être soutenu par l'intermédiaire du deuxième palier de désaccouplement rotatif (60), ainsi qu'une unité de génération d'une force de débrayage (54, 70) qui comprend un élément de transmission de force (70) soutenu ou susceptible d'être soutenu sur le carter de la boîte de vitesses (124).

12. Système d'embrayage selon la revendication 1,
**caractérisé en ce que** le carter (18) comporte à l'intérieur en direction radiale une zone de soutien, qui est soutenue ou susceptible d'être soutenue en direction axiale sur l'arbre de sortie (132), par l'intermédiaire du deuxième palier de désaccouplement rotatif (60).

13. Système d'embrayage selon la revendication 1,
**caractérisé en ce que** le carter (18) est solidement relié ou susceptible d'être relié avec une plaque de butée (16) et **en ce que** la plaque de butée (16) est soutenue ou susceptible d'être soutenue en direction axiale sur l'arbre de sortie (132) par l'intermédiaire du deuxième palier de désaccouplement rotatif (60).

14. Système d'embrayage selon l'une quelconque des revendications 1 à 13,
**caractérisé en ce que** l'agencement de disques d'embrayage (26) comprend une pluralité de zones de disques d'embrayage (32, 34) reliées ou susceptibles d'être reliées avec l'arbre de sortie (132) par l'intermédiaire d'un moyeu commun (28), pour la rotation autour d'un axe de rotation (A), une plaque intermédiaire (24) étant prévue à chaque fois entre deux zones de disques d'embrayage (32, 34).
